# EUROPEAN PATENT APPLICATION

(11) **EP 4 814 752 A1**
(43) Date of publication of application: **30.09.2026**
(21) Application number: 25166184.9
(22) Date of filing: 25.03.2025
(51) Int. Cl.: G06F 16/9535

(54) **CONTENT AND USER SEGMENTATION SYSTEM FOR RECOMMENDATIONS**

(71) Applicant: Nagravision Sàrl, 1033 Cheseaux-sur-Lausanne (CH)
(72) Inventor: LUCAS, Matthew Thomas, 1033 Cheseaux-sur-Lausanne (CH); LEWIS, Peter, 1033 Cheseaux-sur-Lausanne (CH); GIDLEY, Benjamin, 1033 Cheseaux-sur-Lausanne (CH); BENNETT-JAMES, Jonathan, 1033 Cheseaux-sur-Lausanne (CH); HOLBROOK, Craig, 1033 Cheseaux-sur-Lausanne (CH); COUCH, Lyndon, 1033 Cheseaux-sur-Lausanne (CH); HARVEY, Malcolm, 1033 Cheseaux-sur-Lausanne (CH)
(74) Representative: Novagraaf International SA

(57) **Abstract**

The present disclosure provides a computer-implemented method (500) for recommending content items to users. The method includes providing (510) a predefined categorization system comprising first segments for categorizing content items and second segments for categorizing users. For each content item, a set of one or more first segments characterizing the content item is identified (520) based on content metadata, and encoded (540) into a vector using a first embedding model (LLM_EM5). For at least one user, a set of one or more second segments characterizing the user is identified (530) based on user behavioral data, and encoded (550) into a vector using the first embedding model (LLM_EM5). At least one content item is selected (560) for the user by comparing the vectors representing the content items and the vector representing the user, to recommend the selected content item to the user.

## Description

### FIELD OF INVENTION

The present disclosure relates to content recommendation systems, and more particularly to a method, system, and computer-readable medium for recommending content to users.

### BACKGROUND

A content recommendation system is a system that makes content recommendations to users, for example on a video platform, based on their preferences, viewing history, behavior, and trends. It uses algorithms to personalize recommendations, helping users discover relevant or interesting content, improving user engagement, and increasing user's watching time.

The existing content recommendation systems face the challenge of ensuring that the content suggested by the system is highly relevant for users. It requires the system to accurately analyze user preferences based on their behavior, such as clicks, views, likes/dislikes, or skips as they engage with the content over time. This challenge involves continuously monitoring user interactions with the content, acquiring a deep understanding of user behaviour and content, adapting to changes in user interests over time, etc. Improving recommendation accuracy allows to increase user engagement, as more relevant recommendations lead to higher click-through rates, longer watch times, and a better overall user experience.

It has been appreciated that a content recommendation system is needed that overcomes one or more of these problems.

### SUMMARY

This Summary is provided to introduce a selection of concepts in a simplified form that are further described below in the Detailed Description.

In a first aspect, a computer-implemented method for recommending content items to users is provided. The method includes: providing a predefined categorization system comprising first segments for categorizing content items and second segments for categorizing users; for each content item of a plurality of content items: identifying a set of one or more first segments that characterizes the content item, based on first input data including content metadata associated with the content item, and encoding the identified set of first segments into a vector using a first embedding model; for at least one user: identifying a set of one or more second segments that characterizes the user, based on second input data including user behavioral data describing interactions of the user with content items, encoding the identified set of second segments into a vector using the first embedding model; and selecting at least one content item for the user by comparing the vectors representing the content items and the vector representing the user, to recommend the at least one selected content item to the user.

This method enables efficient and personalized content recommendations by leveraging a unified categorization system for both content items and users. By encoding the segments into vectors using the same embedding model, the method facilitates direct comparison between content characteristics and user preferences, leading to more accurate and relevant recommendations.

The first input data may include a plurality of reference datasets, each reference dataset comprising: content metadata associated with a reference content item and at least one pre-identified first segment characterizing said reference content item.

Utilizing reference datasets with pre-identified segments allows for more accurate content categorization, as it allows the system to learn from expertly selected examples and improve its segmentation capabilities over time.

The method may further comprise a step of enhancing the content metadata associated with said content item by adding extra metadata using a Large Language Model (LLM), wherein the first input data comprises the enhanced content metadata.

Enhancing content metadata using an LLM allows for richer and more comprehensive content descriptions, potentially uncovering latent characteristics that may not be apparent in the original metadata. This can lead to more nuanced content categorization and ultimately more precise recommendations.

The method may also include a step of enhancing each reference dataset by adding extra metadata associated with the reference content item using a Large Language Model (LLM), wherein the first input data comprises the enhanced reference datasets.

Enhancing reference datasets with LLM-generated metadata improves the quality and depth of the training data, leading to more robust and accurate content segmentation models.

The method may further comprise a feedback loop process where an output dataset containing the content metadata and identified first segments, associated with a content item of the plurality of content items, is fed back into the input data as a new reference dataset.

Implementing a feedback loop allows the system to continuously learn and improve its categorization accuracy over time, adapting to new content and evolving user preferences.

The feedback loop process may use at least one method of the group including: A/B testing of the output dataset, and verification of the output dataset by a human operator.

Incorporating A/B testing and human verification in the feedback loop ensures that the system improvements are validated both quantitatively and qualitatively, maintaining high-quality recommendations while allowing for continuous refinement.

For each content item of a plurality of content items, a first data processing path may process the first input data by: encoding the content metadata associated with the content item into a vector using a second embedding model; encoding each reference dataset into a vector using said second embedding model; identifying the first segments characterizing the content item by comparing the vector representing said content item and the vectors representing the reference datasets.

This approach allows for more sophisticated content categorization by leveraging vector representations and similarity comparisons, potentially capturing subtle relationships between content items and reference datasets.

For each content item of a plurality of content items, a second data processing path may process the first input data by prompting a LLM to identify first segments characterizing the content item using the reference datasets as examples.

Utilizing an LLM for content segmentation provides an alternative approach potentially identifying segments that may be missed by the vector-based method.

In the second input data, the user behavioral data may include, for each content item the user interacts with, the content metadata and identified first segments associated with said content item.

This approach allows for more comprehensive user profiling, taking into account not just what content users interact with, but also the characteristics of that content.

For the user, a first data processing path may process the second input data by calculating an engagement score on the first segments associated with the content the user interacts with and mapping said first segments to second segments.

The second input data may further include the plurality of reference datasets, and a second data processing path may process the second input data by: encoding the user behavioral data into a vector using a third embedding model; encoding each reference dataset into a vector using said third embedding model; identifying the second segments characterizing the user by comparing the vector representing said user and the vectors representing the reference datasets.

This vector-based approach to user segmentation allows for nuanced comparisons between user behavior and reference datasets, potentially capturing subtle patterns in user preferences that may not be apparent through other methods.

The second input data may further include the plurality of reference datasets, and a third data processing path may process the second input data by prompting a LLM to identify second segments characterizing the user using the reference datasets as examples.

Using an LLM for user segmentation provides an alternative approach that can potentially identify user segments that may be missed by the vector-based method.

The method may further comprise, for each content item, determining a probability score that said content item can be categorized in each identified first segment, and for the user, determining a probability score that said user can be categorized in each identified second segment.

Incorporating probability scores for both content and user segmentation allows for more nuanced recommendations, taking into account the degree of certainty in categorizations.

The method may further comprise the steps, performed for each content item of the plurality of content items, of: obtaining a plurality of user reviews for the content item; generating a review summary by processing the plurality of user reviews and the metadata associated with the content item, using a LLM; generating a list of one or more sentiment tags through automated analysis of the plurality of user reviews; enriching the content metadata with the generated review summary and list of sentiment tags for further processing.

The method may further comprise a step of generating at least one of a personalized content summary, a personalized synopsis, a personalized review for a content item by processing the content metadata associated with said content item and the identified set of one or more second segments associated with a target user, using a LLM.

Generating personalized content descriptions, like a summary, synopsis or review, tailored to individual user characteristics can significantly enhance the user experience, providing more engaging and relevant information about recommended content.

**In** a second aspect, a system for recommending content items to at least one user is provided. The system includes: a database storing a predefined categorization system comprising first segments for categorizing contents and second segments for categorizing audience; a segmentation module configured for each content item of a plurality of content items, identify a set of one or more first segments that characterizes the content item, based on first input data including content metadata associated with the content item, and for at least one user, identify a set of one or more second segments that characterizes the user, based on second input data including user behavioral data describing interactions of the user with content items; a second segmentation module configured to identify a set of one or more second segments that characterizes the at least one user in the predefined categorization system, based on user behavioral data describing interactions the user has with the contents, a selection module configured to: for each content item, encode the identified set of first segments into a vector using a first embedding model; for the at least one user, encode the identified set of second segments into a vector using the first embedding model; and select at least one content item for the user by comparing the vectors representing the content items and the vector representing the user, to recommend the at least one selected content item to the user.

This system provides an architecture for content recommendation, integrating content and user segmentation with vector-based comparison for efficient and accurate content selection.

In a third aspect, a non-transitory computer-readable medium storing instructions that, when executed by a processor, cause the processor to perform the method of any of the previously described aspects is provided.

The system may be used for recommending content items to at least one user in a content delivery platform.

### BRIEF DESCRIPTION OF FIGURES

Embodiments of the invention will be described, by way of example, with reference to the following drawings, in which:
FIG. 1 illustrates a block diagram of a content delivery system provided with a recommendation system, according to an embodiment of the present disclosure.
FIG. 2 depicts a flowchart of a method for content recommendation, in accordance with an embodiment.
FIG. 3 illustrates a detailed flowchart of a step of segmenting a content in the method of FIG. 2, according to an embodiment.
FIG. 4 depicts a detailed flowchart of another step of segmenting a user in the method of FIG. 2, according to an embodiment of the present disclosure.
FIG. 5 illustrates a flowchart of a method for generating a content summary associated with sentiment tags, in accordance with an embodiment.
FIG. 6 depicts a flowchart of a method for generating a personalized, user-specific, content summary, according to an embodiment of the present disclosure.
FIG. 7 illustrates a block diagram of internal components of a content recommendation system, according to an embodiment of the present disclosure.

Common reference numerals are used throughout the figures to indicate similar features.

### DETAILED DESCRIPTION

The present disclosure relates to a computer-implemented method and system for recommending content items to users in a content delivery system. The method utilizes a predefined categorization system comprising segments for categorizing both content items and users.

As used herein, the term "segments" refers to predefined categories used to classify and characterize both content items and users based on shared characteristics within the content recommendation system. Segments are part of a standardized categorization system and may include:
- "First segments" that are categories used to classify and describe attributes of content items, such as genre, theme, tone, or subject matter (e.g., "action movie", "romantic comedy", or "historical documentary";
- "Second segments" that are categories used to classify and describe attributes of users, such as interests, preferences, or viewing habits (e.g., "sports fan", "science-fiction enthusiast", or "documentary lover").

For each content item, the system may enhance associated metadata using artificial intelligence (AI) and identify segments that characterize the content based on this enhanced metadata. Similarly, for each user, the system analyzes behavioral data describing user interactions with content items to identify segments that characterize the user. Segments can be associated with probability scores indicating the degree to which a content item or user aligns with each segment.

These identified segments for both content items and users are converted, encoded into numerical vector representations using an embedding model.

The system selects content items for recommendation by comparing the vector representing the user with the vectors representing the content items in a shared vector space, typically a high-dimensional space.

The system may implement a feedback loop that refines the categorization of content items and users based on user interactions with suggested content items. This approach allows for continuous improvement of the recommendation accuracy.

Additional features of the system may include generating summaries of user reviews for content items, deriving sentiment tags through automated analysis of the user reviews, and creating a personalized content summary, synopsis and/or review adapted to a target user by processing together metadata associated with the content and an identified set of segments characterizing the user.

The personalized summary or synopsis may include a synopsis of a main plot or theme, describing the content generally while highlighting important aspects, such as main characters, cast, genre, setting, and major plot events. It may describe the emotional tone of the content, aligning with user preferences.

This content recommendation method and system of the present disclosure improves the recommendation accuracy and offer multiple advantages in personalizing content delivery, improving user engagement, and adapting to changing user preferences over time. The combination of AI-enhanced metadata, vector-based comparisons, and a dynamic feedback mechanism provides a robust and flexible solution for content recommendation in various delivery platforms.

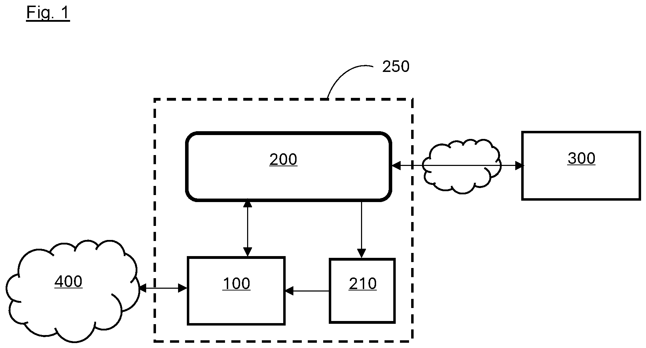

FIG. 1 illustrates a global system 250 including a recommendation system 100, a content delivery system 200 and an analytics system 210, according to an embodiment.

The content delivery system 200 may include a content platform (e.g., a video platform) and a content delivery network (CDN). The content platform is responsible for providing access to a plurality of content items, such a video content items, including movies, TV shows, original productions, etc., while offering personalized content recommendations to enhance user engagement and satisfaction. The content delivery network is responsible for delivering content items to users equipped with user devices 300.

A plurality of user devices 300 can be connected to the content delivery system 200 through at least one communication network.

The analytics system 210 has the role of collecting and analyzing user behavioral data that describes interactions a user has with content items, such as viewing duration, pausing, rewinding, fast-forwarding, liking, disliking, sharing, commenting, rating, adding to favorites, etc.

The recommendation system, or engine, 100 is responsible for generating personalized content recommendations for users. It is configured to :
- process content metadata associated with content items;
- process user behavioral data for at least one target user;
- to generate a personalized content recommendation for each target user, as will be described later in more details.

The recommendation system 100 uses a predefined categorization system comprising first segments for categorizing content items and second segments for categorizing users or audience. This categorization system can be stored in memory within the recommendation system 100. For example, the categorization system can include a standardized segment taxonomy such as the Interactive Advertising Bureau (IAB) Content Taxonomy and the IAB Audience Taxonomy.

The recommendation system 100 is configured to perform several data processing operations, including identification of one or more segments that characterize a content item based on content metadata, identification of one or more segments that characterize a user based on user behavioral data, vector encoding and comparisons, as will be described later in more detail.

In an embodiment, the recommendation system 100 is further configured to enhance, enrich, and supplement the content metadata associated with a content item by addition of extra metadata using artificial intelligence and machine learning. This allows the system to generate more comprehensive and accurate content characterizations.

By using AI to gather additional relevant metadata, for example, from sources on the internet or a knowledge database, the system 100 can identify additional content attributes or descriptive information that may not be present in the original content metadata and would be more nuanced. This enhanced content metadata provides a more developed basis for content segmentation and recommendation, thus improving the relevance, accuracy and diversity of content recommendations.

The user device 300 is configured to present content recommendations to a user.

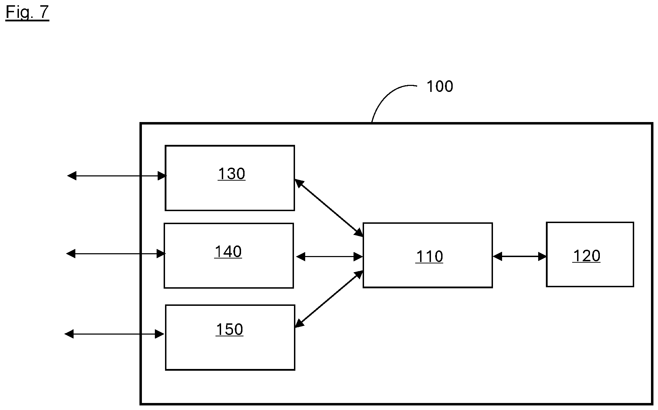

FIG. 7 illustrates internal components of the content recommendation system 100, according to an embodiment. The content recommendation system 100 includes at least one processor 110, at least one memory 120, a first communication interface 130, a second communication interface 140, and a third communication interface 150.

The processor 110 executes instructions stored in the memory 120 to perform content recommendation operations.

The memory 120 may store a database containing the predefined categorization system comprising first segments for categorizing content and second segments for categorizing users.

The memory 120 may be a non-transitory computer-readable medium storing instructions that, when executed by the processor 110, cause the processor 110 to perform the content recommendation method that will be described later.

The content recommendation system 100 is designed to communicate with the content delivery system 200, specifically with the content platform, the analytics system 210, and external sources on the internet and/or a knowledge base 400. These communications occur over a network, such as the internet, using one or more communication interfaces, such as interfaces 130, 140, and 150.

The content recommendation system 100 comprises several functional modules. A segmentation module is responsible for identifying first segments that characterize each content item based on content metadata and second segments that characterize each user based on user behavioral data. A selection module is configured to encode the identified segments into vector representations of the content items and users, select one or more content items for a target user by comparing the vectors associated with the content items and the target user.

The content recommendation system 100 may further include at least one of the following modules:
- a feedback module configured to implement either a periodic or continuous feedback loop to refine the categorization of content items and users based on user interactions with recommended content items;
- a review summarizer and sentiment analysis module configured to summarize user reviews and analyze user sentiment about content items;
- a personalized, more relevant content description generator configured to generate personalized, advantageously improved, reviews and/or synopses of the content items.

These modules are implemented using a combination of hardware and software, such as the processor 110 and instructions stored in memory 120.

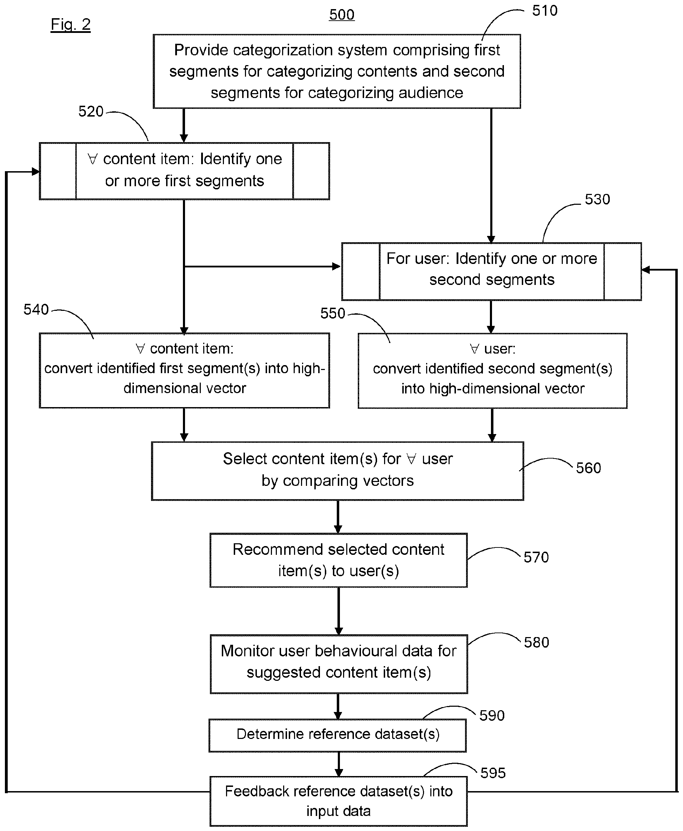

The components of the content recommendation system 100 work together to provide personalized content recommendations to users. The operation of the content recommendation system corresponds to the method of content recommendation that will now be described with reference to FIG. 2, according to an embodiment.

FIG. 2 illustrates a method 500 for recommending one or more content items to at least one user, according to an embodiment. The method 500 may be implemented by the content recommendation system 100 using the processor 110 executing instructions stored in the memory 120.

The method 500 includes a step 510 of providing the predefined categorization system comprising first segments for categorizing content and second segments for categorizing users to the recommendation system 100. This categorization system may be stored in the memory 120 of the content recommendation system 100. It may include the IAB Content Taxonomy and IAB Audience Taxonomy, which are standardized classification systems developed by the Interactive Advertising Bureau (IAB). The content taxonomy defines segments for categorizing content items based on topics and themes, while the audience taxonomy defines segments for categorizing users based on interests, behaviors, and demographics.

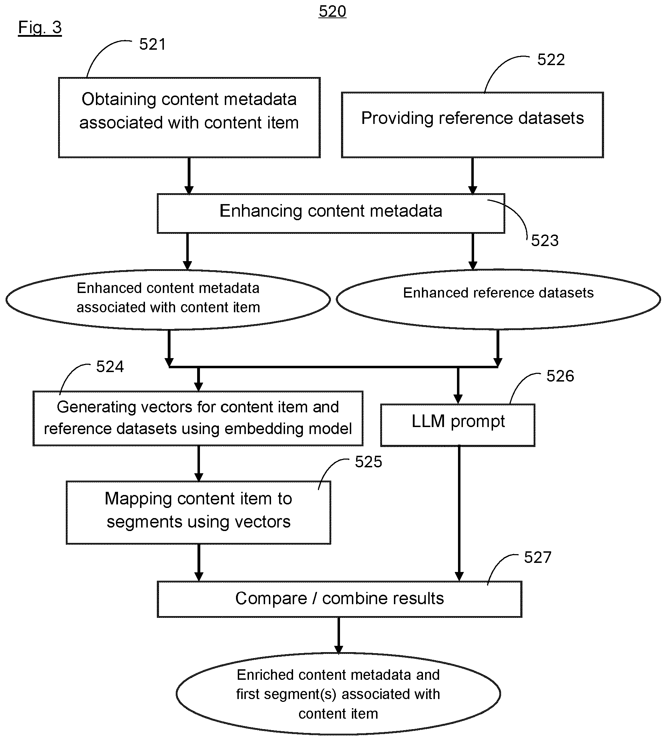

In a step 520, for each content item of a plurality of content items, the content recommendation system 100 identifies a set of one or more first segments that characterizes the content item-based input data including content metadata associated with the content item. The plurality of content items may include at least part of the content items available on the content platform. This step 520 corresponds to a content segmentation process, which is described in more detail in FIG. 3.

FIG. 3 illustrates the content segmentation process 520, according to an embodiment. This process is used to identify the segments characterizing a content item, which may be referred to as a "candidate content item", as it serves as a potential candidate for content recommendation. It may be implemented by the content recommendation system 100 using the processor 110 executing instructions stored in the memory 120.

The content segmentation process 520 begins with a step 521 of obtaining content metadata associated with the candidate content item. Content metadata refers to descriptive information about the content, such as titles, summaries, keywords, timestamps, authors, actors, categories, etc. This content metadata may be produced by a content producer, or a metadata producer, and received from the content platform via the first communication interface 130 or from an external source or knowledge base via the third communication interface 150.

In a step 522, the system 100 is provided with multiple reference datasets, each containing pre-segmented content metadata for various reference content items. Each reference dataset includes the content metadata of a reference content item and one or more first segments characterizing this reference content item. These datasets can be stored in a database, for example located in the memory 120. The database can be continuously updated or enriched with new reference datasets through a feedback loop, as detailed later.

A step 523 includes enhancing, enriching the content metadata to produce enhanced content metadata associated with the candidate content item and optionally enhanced reference datasets.

This enhancement process leverages the capabilities of large language models (LLMs) to enrich the existing content metadata with additional information, referred to as extra metadata, related to the content, obtained from external source(s) on the internet and/or from a knowledge base. The extra metadata could include more detailed plot summaries, character descriptions, thematic analyses, historical context, critical opinions or related cultural references. For example, if the original metadata for a movie only includes a brief synopsis and genre, the LLM might add information about the movie's style, similar films in the same genre, critical reviews, user reviews, ratings and/or analyses. By expanding the metadata in this way, the system 100 can create a richer and more detailed representation of each content item. This enriched dataset - including the original metadata and the extra metadata - serves as a basis for more accurate and granular content segmentation, allowing the recommendation system to identify more specific and relevant segments that characterize the content item. Consequently, this leads to improved matching between content items and user preferences, enhancing the overall quality of content recommendations.

The content segmentation process 520 includes at least one data processing path for processing input data to identify segments for the content item.

The input data of each data processing path may include:
- the content metadata associated with the content item, optionally enhanced through the enhancing process 523, and
- the reference datasets, optionally enhanced through the enhancing process 523.

In an embodiment, the content segmentation process 520 includes a first and second data processing path. Alternatively, only one of the first and second data processing paths may be executed.

The first data processing path may comprise steps 524 and 525.

In step 524, the content recommendation system 100 analyzes the enhanced metadata associated with the candidate content item and the enhanced metadata of the reference datasets and generates:
- a high-dimensional vector representing the candidate content item, and
- a high-dimensional vector representing each of reference dataset,
using a Large Language Model LLM-based embedding model, referred to as "LLM_EM1", (e.g., BERT: Bidirectional Encoder Representations from Transformers).

High-dimensional vectors refer to vectors with many numerical values (dimensions), where each dimension represents a specific feature or aspect of the data.

The embedding model captures the context and relationships between metadata elements and encodes, converts them in a high-dimensional vector for further processing. The same embedding model is used to convert into high-dimensional vectors the metadata of the candidate content item and the metadata of the reference content items. In models like BERT, high-dimensional vectors typically have hundreds to thousands, even millions, of dimensions. This allows the model to capture complex relationships and contextual information in a detailed and nuanced way. The dimensionality of the vectors may be predefined in the model. Alternatively, it may be determined based on factors such as the task complexity (e.g., metadata analysis), the training dataset size, or a trade-off between accuracy and efficiency, etc.

**In** step 525, the content recommendation system 100 maps the candidate content item to one or more segments using the vectors representing the candidate content item and the reference content items in a shared vector space. More specifically, the step 525 may compare the high-dimensional vector representing the candidate content item with the high-dimensional vectors representing the reference datasets (i.e., the reference content items) to determine how close vectors are in high-dimensional space. This may involve using techniques like clustering (e.g., a K-Means algorithm) or similarity measures (e.g., Euclidean distance). The content recommendation system 100 compares the vectors representing the reference content items to the vector representing the candidate content item, identifies segments that are relevant to the candidate content item based on the comparison, and determines segment probabilities for the candidate content item by scoring the identified segments based on the comparison.

The second data processing path is represented by step 526, which includes directly prompting a large language model (LLM), referred to as "LLM2", to identify segments for the candidate content item. For that purpose, the large language model LLM2 may be provided with:
- the enhanced metadata associated with the candidate content item;
- the enhanced reference datasets, serving as examples; and
- the predefined categorization system,
in a prompt.

In a step 527, the content recommendation system 100 may compare the results of the two data processing paths 524-525 and 526. In an embodiment, the results may be averaged, or weighted and then combined, for improved accuracy.

The output of the content segmentation process 520 includes, for the candidate content item:
- the enhanced content metadata associated with this candidate content item,
- the identified set of one or more first segments that characterizes this candidate content item, and
- optionally assigned segment probabilities.

This output dataset may be used in subsequent steps of the method 500 for content recommendation and potentially in a feedback loop process to update the reference dataset database.

In a variant, the content segmentation process 520 may also include a user review analysis process including an analysis of user reviews related to a given content item to generate a review summary and sentiment tags. This review summary and sentiment tags may serve as extra metadata and be added to the content metadata associated with the content item, to enhance them for further processing.

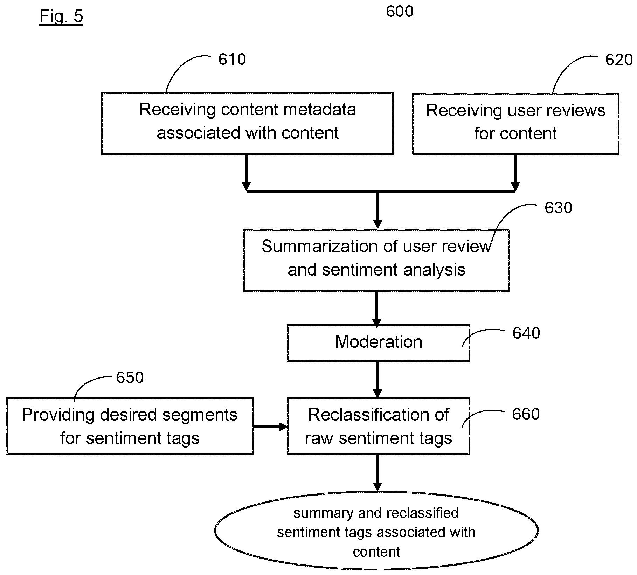

FIG. 5 illustrates a method 600 for generating review summary and sentiment tags for a content item, according to an embodiment. The method 600 may be implemented by the review summarizer and sentiment analysis module of the content recommendation system 100 using the processor 110 executing instructions stored in the memory 120.

The method 600 begins with a step 610 of receiving content metadata associated with the content item. This content metadata may be stored in memory in the system 100 or obtained from the content platform or another external source or knowledge base. In some embodiments, the received content metadata may have been enhanced by addition of extra metadata as previously described.

In a step 620, the review summarizer and sentiment analysis module receives user reviews on the content item. These user reviews refer to user-generated content such as reviews or comments about a content item. They may be collected from one or more external sources on the internet, a knowledge base and/or the content platform, for example.

In a step 630, the review summarizer and sentiment analysis module inputs the content metadata and user reviews to automatically perform two tasks: a summarization of the user reviews and a sentiment analysis of the reviews. The review summarizer and sentiment analysis module may use a large language model (LLM) to automatically perform these tasks. The sentiment analysis may derive, for example, a predetermined maximal number of key sentiment tags (e.g., 10 key sentiment tags) from the user reviews through analysis.

As used herein, the term "sentiment tags" refers to predefined labels or categories that represent emotional tones, opinions, or attitudes extracted from user-generated content such as reviews or comments about a content item. These tags are derived through sentiment analysis of the user reviews related to a content item and are used to categorize and summarize the overall sentiment expressed towards the content item. Sentiment tags may include, but are not limited to, labels such as "positive," "negative," "neutral," as well as more specific descriptors like "exciting," "boring," "inspiring," or "disappointing." In the context of this invention, sentiment tags are generated through automated analysis of user reviews and are subsequently mapped to a predefined set of standardized tags to ensure consistency in content categorization and recommendation processes.

The output data generated through step 630 includes a review summary and a set of raw sentiment tags.

In a step 640, the output data from the LLM summarization and sentiment analysis is passed through a moderation process. This moderation process reviews and manages the review summary and raw sentiment tags to ensure compliance with platform guidelines and prevent issues such as spam, fake reviews, hate speech, or misinformation.

A step 650 involves reclassification of the raw sentiment tags generated in step 630.

For that purpose, the review summarizer and sentiment analysis module may use a predefined set of sentiment tags or sentiment classes or sentiment labels, for example 100 sentiment tags, stored in a database. Each predefined sentiment tag may be encoded, converted into a high-dimensional vector using an embedding model. These vectors are stored in a vector database.

Then, in step 650, for each raw sentiment tag to be reclassified, the review summarizer and sentiment analysis module may create a vector for the raw sentiment tag using the same embedding model, and perform for example a nearest neighbors lookup (e.g., k-Nearest Neighbors (k-NN)) in a shared vector space, or any appropriate similar technique, to identify the predefined segment tag that best matches the raw sentiment tag. The module outputs this identified segment tag as the reclassified sentiment. This process 650 remaps the raw sentiment tags output from the LLM in step 630 to predefined, known tags of the database. This reclassification reduces the large space of possible LLM-generated sentiments to a known set of predefined segments.

In step 660, the review summarizer and sentiment analysis module outputs the results of the process 600, which includes a summary of the user reviews and sentiment tags, associated with the content item.

The method 600 allows for the generation, for any content item, of a review summary and one or more sentiment tags, providing additional metadata to enhance the content metadata used in the content recommendation process, for example in step 523.

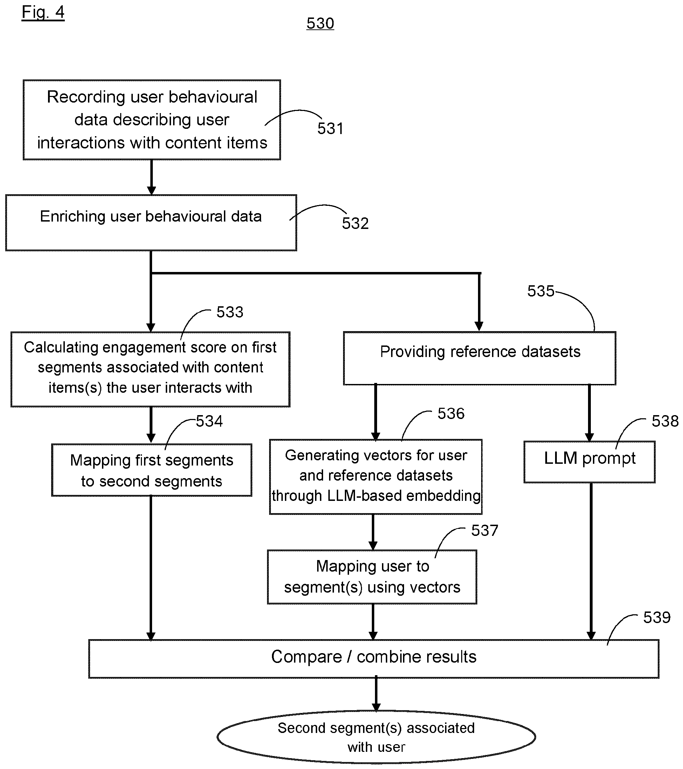

The method 500 further includes a step 530 where for each target user - a user identified as the recipient of content recommendations - the content recommendation system 100 identifies a set of one or more second segments that characterize the user based on user behavioral data describing interactions of the user with content items, typically in the content delivery system. This step 530 corresponds to a user segmentation process, which is described in more detail in FIG. 4.

FIG. 4 illustrates the user segmentation process 530 according to an embodiment. The user segmentation process 530 may be implemented by the content recommendation system 100 using the processor 110 executing instructions stored in the memory 120.

The user segmentation process 530 begins with a step 531 of recording user behavioral data describing interactions a user has with content items. This data may include viewing duration, pausing, rewinding, fast-forwarding, liking, disliking, sharing, commenting, rating, adding to favorites, and other relevant interactions.

A step 532 provides the content recommendation system 100 with segmented content metadata associated with the content items the user has interacted or interacts with. This segmented content metadata is a dataset including content metadata, preferably enhanced, and a set of one or more first segments, both associated with the content item. This dataset may have been generated as the output of the previously described content segmentation process 520.

**In** this step 532, the user behavioral data may be enriched with the datasets - metadata, preferably enhanced, and first segment(s) - respectively associated with the content items the user has interacted or interacts with.

The user segmentation process 530 includes at least one data processing path configured to process input data to identify second segments for the user. This input data includes the user behavioral data describing the interactions of the user with content items. Additionally, this user behavioral data may include, for each content item the user interacts with, the content metadata and the identified set of first segment(s), both associated with said content item.

**In** an embodiment, the process includes at least part of three data processing paths described below.

The first data processing path may comprise steps 533 and 534. In step 533, the content recommendation system 100 calculates an engagement score on first segments associated with the content items the user has interacted or interacts with. This calculation uses the user behavioral data and the first segments associated with the content items the user has interacted or interacts with to determine an engagement score against each first segment.

In step 534, the content recommendation system 100 maps the first segments (content segments) to second segments (user or audience segments). Using the determined engagement scores against the first segments and the mapping for content segments to audience segments, the system 100 calculates a probability of the user being in each mapped second segment.

The second data processing path may comprise steps 535, 536, and 537. This path is based on vector embedding and is similar to steps 524-525 performed for content segmentation.

In step 535, the reference datasets, each including the content metadata of a reference content item, preferably enhanced, and one or more first segments characterizing this reference content item, are provided as input data in the second data processing path.

The step 536 involves generating high-dimensional vectors representing the behavioral data of the target user - preferably enriched through step 532 - and the reference datasets, using a LLM-based embedding model LLM_EM3.

In step 537, the content recommendation system 100 maps the user to segments using the generated vectors. This step is similar to step 525 in the content segmentation process 520. More specifically, the step 537 may compare the high-dimensional vector generated for the user with the high-dimensional vectors generated for the reference content items to determine how close vectors are in high-dimensional space, using techniques like clustering (e.g., a K-Means algorithm) or similarity measures (e.g., Euclidean distance). The content recommendation system 100 compares the vectors representing the reference datasets to the vector representing the user, identifies segments that are relevant to the user based on this comparison, and determines segment probabilities for the user by scoring the identified segments based on the comparison.

The third data processing path includes step 538, which involves directly prompting a large language model (LLM), referred to as "LLM4", to identify segments for the user. The LLM4 may be provided with the user behavioral data (preferably enriched through step 532), reference datasets (in step 535), and the predefined categorization system, in the prompt. This step 538 is similar to step 526 previously described.

Optionally, the identified segments for the user from step 537 and the identified segments for the user from step 538 could be mapped to audience segments, following the same approach as in step 534.

In a step 539, the content recommendation system 100 may compare and/or combine results from the different data processing paths 533-534, 535-537, 538 to provide a set of second segments characterizing the user, scored with segment probabilities. In an embodiment, the results output from the different data processing paths may be averaged, or weighted and then combined, for improved accuracy.

The output of the user segmentation process 530 includes a set of second segments with respective segment probabilities, associated with the user, which may be used in subsequent steps of the method 500 for content recommendation.

With reference to FIG. 2, in a step 540, for each candidate content item, the content recommendation system 100 converts, encodes the identified set of first segments assigned with segment probabilities, determined in the step 520, into a high-dimensional vector using an LLM-based embedding model, referred to as LLM_EM5. This vector is a representation of the content item's characteristics in a high-dimensional space.

In a step 550, for each target user, the content recommendation system 100 converts, encodes the identified set of second segments assigned with segment probabilities, determined in the step 530, into a high-dimensional vector using the same LLM-based embedding model LLM_EM5. This vector is a representation of the user characteristics (preferences, interests, or viewing habits, etc.), derived from his interactions with content items, in the high-dimensional space. This conversion allows for user characteristics to be represented in the same high-dimensional space as content characteristics.

In a step 560, the content recommendation system 100 selects at least one content item for a target user by comparing the vectors representing the content items with the vector representing the target user. This comparison may involve using techniques like similarity measures (e.g., calculating similarity scores or distances between vectors) or clustering (e.g., K-Means algorithm) to identify one or more content items that closely match or aligns with the user's preferences.

Finally, in a step 570, the content recommendation system 100 may transmit to the content platform information related the content items selected for the target user. For example, this information may include identifiers of the selected content items associated with an identifier of the target user. The content platform may then recommend or promote these selected content item(s) specifically to this target user.

In an embodiment, the content recommendation system 100 may implement a feedback loop process to refine the categorization of content items and users based on user interactions with suggested content items. This feedback loop allows for continuous improvement of the recommendation accuracy over time.

With reference to FIG. 2, this feedback loop process may comprise a step 580 of monitoring user behavioral data describing interactions of users with suggested, recommended content item(s). This monitoring process involves collecting and analyzing various types of user interactions with the recommended content items. These interactions may include, for example :
- viewing duration: how long users spend watching or engaging with the suggested content,
- click-through rates: whether users click on or select the recommended content items;
- completion rates: if users finish watching the entire content;
- user ratings or reviews: any feedback provided by users after engaging with the content;
- social sharing: if users share the content with others.

This step 580 may be performed by the analytics system 210 in communication with the content platform 200. This analytics system 210 may continuously gather this user behavioral data from a plurality of users and monitor these user interactions with the suggested content items to assess the effectiveness of the recommendations.

The feedback loop process may further include a step 590 of determining one or more reference datasets including segmented content metadata (i.e., content metadata and a set of one or more first segments, both associated with a content item) for content items that have been suggested to users. This step 590 may be performed by selecting one or more datasets among the output datasets - each including content metadata, preferably enhanced, an identified set of one or more first segments, both associated with a content item - that are produced by the process of content segmentation 520 previously described.

A selection criteria used in the step 590 may include one or more thresholds required to be satisfied by recommendation performance metrics measured for content recommendations made on the basis of these output datasets. These metrics may include click-through rates, viewing duration, user ratings, or other quantifiable measures of user engagement with recommended content. They indicate whether the system's categorization was accurate or needs adjustment. For example, a threshold could be set for a minimum click-through rate of 10% or a minimum average viewing duration of 5 minutes for a recommended content item. Content items that meet or exceed these thresholds in user interactions would be considered successful recommendations and thus suitable for inclusion in the reference datasets. This approach ensures that only correct content categorizations are used to refine the system, which contributes to a better understanding of content-segment relationships, thereby improving the overall accuracy of future recommendations. By setting and adjusting these thresholds, the system can continuously optimize its performance.

In one implementation, the step 590 may include A/B testing operations where two content items A, B are respectively tested on two user groups belonging to a same cluster of users sharing same or similar characteristics (e.g., interests, behaviors, and demographics) to determine which performs better based on recommendation performance metrics (e.g., CTR, watch time, engagement). The A/B testing allows to measure the effectiveness of content recommendations on the video platform. It can be used to identify the content item that best aligns with one or more segments. For example, the system may promote two content items associated with a segment like "horror film" to users who are categorized as horror fans. The system may then determine if these users clicked on the suggested content A or B. If the majority of users clicked on content A, it indicates that A is the best match for the "horror fan" segment. Then, the dataset including the metadata, optionally enhanced, and the segment "horror film" associated with this content A can be selected in the step 590 to serve as new reference dataset.

In another implementation, the step 590 may include verification by a human operator. The human operator can review at least part of the output datasets - each including enhanced content metadata and identified one or more first segments associated with a content item - that are produced by the process of content segmentation 520 and, if needed, modify the first segments of the dataset before it is fed back into the system. This human-in-the-loop approach helps to mitigate potential issues with AI self-training and ensures the accuracy of the reference datasets.

In a step 595, the reference datasets determined in step 590 are fed back into the input data, serving as new reference datasets for further processing of content segmentation 520 and user segmentation 530 processes.

In an embodiment, based on the user interactions with recommended content items, the system can adjust the weighting of content items within specific segments (i.e., the segment probabilities for a given content item). For instance, if users categorized as "horror fans" consistently do not click on a recommended content item categorized as a "horror film", the system may reduce the segment probability, or strength of that content's association with the horror segment. Conversely, if users frequently engage with a recommended content item, its association with the relevant segments may be strengthened by increasing the corresponding segment probabilities.

This process of testing, analyzing, and refining can be done automatically for large volumes of data, or through human review. The system does not require a large number of reference datasets to improve its accuracy, which is one of the key advantages of using AI in this context.

By implementing this feedback loop, the content recommendation system 100 becomes increasingly accurate in matching content items to users over time. The feedback loop represents an improvement in the present disclosure, as it combines metadata-based predictions with user behavior-based predictions. This integration allows for a more comprehensive and accurate content recommendation system that can adapt to changing user preferences over time.

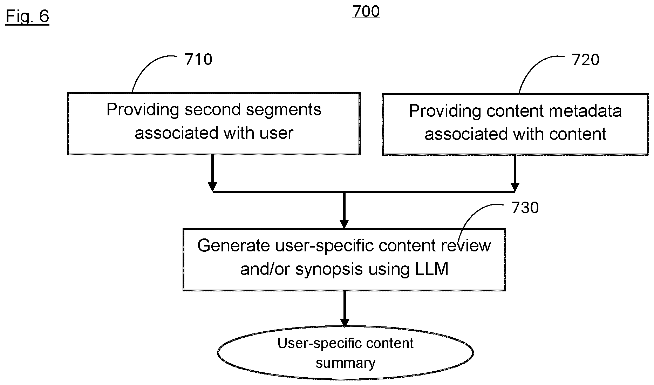

FIG. 6 illustrates a method 700 for generating personalized content description , according to an embodiment. This content description may include at least one of a content summary, a content synopsis and a content review. The method 700 may be implemented by a personalized content description generator of the content recommendation system 100 using the processor 110 executing instructions stored in the memory 120.

The method 700 begins with a step 710 of receiving user data for a target user. This user data may include the set of second segments identified for the user by the user segmentation process 530. The user data may also include other attributes, characteristics, or preferences of the user, such as favorite actors or genres.

In a step 720, the personalized content description generator receives content metadata associated with a content item to summarize. This content metadata may be received from the content platform, external source(s) on the internet, or a knowledge database. The content metadata may include a summary or plot or synopsis of the content item. Additionally, the first segments generated for this content item by the content segmentation process 520 may be provided as input data.

In a step 730, a large language model (LLM) of the description generator is prompted to generate a personalized description, for example a summary, of the content item specifically adapted to the target user. The LLM may be provided with a prompt that includes the user data from step 710 and the content metadata from step 720.

For example, a prompt to the LLM may be structured as follows:
"Given a user who enjoys [list of user's favorite genres and/or segments] and prefers actors like [list of user's favorite actors], generate a personalized summary for the following content: [content metadata including plot and actors]. The summary should highlight aspects of the content that align with the user's preferences and also mention any potential mismatches."

Alternatively, the personalized content description generator could generate the personalized description of the content item using vectors, following the same approach as in steps 524-525, or 536-537.

The same approach as in process 700 could be followed to generate a personalized synopsis or a personalized review of the content. For the personalized synopsis, the content metadata received in step 720 should include a synopsis related to the content item. For the personalized review, the content metadata received in step 720 should include user reviews related to the content. This content metadata may be received from the content platform, external source(s) on the internet, or a knowledge database for example.

More specifically, the method may comprise combining a high-dimensional vector representing a user's content interests with vectors representing content topics, and analyzing the interaction between these vectors using a Large Language Model (LLM). This analysis enables the generation of a personalized review tailored to the specific user. This approach provides a more sophisticated result than the example, previously given, of a prompt to the LLM because it utilizes a full range of concepts identified during vector training rather than a fixed and limited set of concepts. Consequently, the system can generate more nuanced and personalized content reviews that better reflect the multidimensional relationship between user preferences and content characteristics.

Additionally, the prompt can be supplied with content and user vectors and asked to generate the summary using the dense profile of both the content and the user.

The LLM processes the input data and generates a personalized content description tailored to the target user. This description may highlight aspects of the content that align with the user's interests while also noting potential mismatches.

For instance, if the content item is an action film and the user's segments indicate a preference for romantic comedies, the generated description may acknowledge that the user might not typically choose this type of film, but could highlight any romantic subplots, actor, director, sub-genre, or comedic elements present in the action movie that may appeal to the user.

The personalized content description generated by the LLM may be transmitted by the content platform and presented to the user on the user device 300, providing a tailored description of the content item that helps the user decide whether to engage with the content or not.

In some aspects, the process 700 may be implemented independently, without content recommendation.

The content recommendation system may be applied to various content delivery platforms beyond video streaming services. For example, the system may be adapted for use in music streaming platforms, video games platform, podcast platforms, e-book recommendation systems, etc. In each case, the segmentation techniques and embedding models may be tailored to the specific characteristics of the content type and user interaction patterns.

The content recommendation system described herein provides several advantages and features that enhance its effectiveness in providing personalized content recommendations to users. The system is based on an approach to categorizing both content items and users using predefined segments, with each identified segment being advantageously scored with a probability. This probabilistic scoring allows for a nuanced understanding of how strongly a content item or user aligns with particular segments.

The implementation of a feedback loop allows to continuously refines the categorization of content items and users based on actual user interactions with recommended content. This feedback mechanism can use A/B testing or any similar testing technique on the video platform to improve the accuracy of segment identification over time. By analyzing user behavioral data in response to content recommendations, the system can select output datasets, each including metadata and segments associated with one content item that can serve as new reference datasets in the content segmentation process and in the user segmentation process.

The feedback loop may incorporate a human review to ensure the quality and accuracy of the categorization process. A human operator may verify output datasets and modify segment assignments if necessary. This combination of automated analysis and human review helps to mitigate potential biases or errors in the AI-driven categorization process.

The first segmentation process includes a series of steps that enhance the content metadata, identify relevant segments, and refine these identifications through multiple data processing paths.

The content recommendation system achieves a high degree of accuracy, personalization and adaptability. The system's ability to learn from user interactions and refine its categorizations over time ensures that recommendations become increasingly accurate and relevant.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognize that numerous further modifications and combinations of various aspects are possible. Accordingly, the described aspects are intended to encompass all such alterations, modifications, and variations that fall within the scope of the appended claims.

## Claims

1. A computer-implemented method (500) for recommending content items to users, the method comprising:
- providing (510) a predefined categorization system comprising first segments for categorizing content items and second segments for categorizing users;
- for each content item of a plurality of content items:
. identifying (520) a set of one or more first segments that characterizes the content item, based on first input data including content metadata associated with the content item, and
. encoding (540) the identified set of first segments into a vector using a first embedding model;
- for at least one user:
. identifying (530) a set of one or more second segments that characterizes the user, based on second input data including user behavioral data describing interactions of the user with content items,
. encoding (550) the identified set of second segments into a vector using the first embedding model; and
- selecting (560) at least one content item for the user by comparing the vectors representing the content items and the vector representing the user, to recommend the at least one selected content item to the user.

2. The method of claim 1, wherein the first input data includes a plurality of reference datasets (522), each reference dataset comprising:
- content metadata associated with a reference content item and
- at least one pre-identified first segment characterizing said reference content item.

3. The method of claim 1 or 2, wherein
- identifying (520) the set of one or more first segments that characterize a content item comprises a step (523) of enhancing the content metadata associated with said content item by adding extra metadata using a Large Language Model, LLM, and
- the first input data comprises the enhanced content metadata.

4. The method of claim 2 or 3, wherein
- identifying (520) the set of one or more first segments that characterizes the content item comprises a step (523) of enhancing each reference dataset by adding extra metadata associated with the reference content item using a Large Language Model, LLM; and
- the first input data comprises the enhanced reference datasets.

5. The method of any of claims 2 to 4, further comprising a feedback loop process (580, 590, 595) where an output dataset containing the content metadata and identified first segments, associated with a content item of the plurality of content items, is fed back into the input data as a new reference dataset.

6. The method of claim 5, wherein the feedback loop process (580, 590, 595) uses at least one method of the group including:
- A/B testing of the output dataset, and
- verification of the output dataset by a human operator.

7. The method according to claim 2 to 6, wherein, for each content item of a plurality of content items, a first data processing path processes (524, 525) the first input data by:
- encoding (524) the content metadata associated with the content item into a vector using a second embedding model;
- encoding (524) each reference dataset into a vector using said second embedding model;
- identifying (525) the first segments characterizing the content item by comparing the vector representing said content item and the vectors representing the reference datasets.

8. The method of any of claims 2 to 7, wherein, for each content item of a plurality of content items, a second data processing path (526) processes the first input data by prompting a **LLM** to identify first segments characterizing the content item using the reference datasets as examples.

9. The method of any of claims 1 to 8, wherein, in the second input data, the user behavioral data includes, for each content item the user interacts with, the content metadata and identified first segments associated with said content item.

10. The method according to claim 9, wherein, for the user, a first data processing path (533, 534) processes the second input data by calculating (533) an engagement score on the first segments associated with the content the user interacts with and mapping (534) said first segments to second segments.

11. The method according to any of claims 2 to 10, wherein
the second input data further includes the plurality of reference datasets (535), and
a second data processing path (536, 537) processes the second input data by:
. encoding (536) the user behavioral data into a vector using a third embedding model;
. encoding (536) each reference dataset into a vector using said third embedding model;
. identifying (537) the second segments characterizing the user by comparing the vector representing said user and the vectors representing the reference datasets.

12. The method of any of claims 2 to 11, wherein,
the second input data further includes the plurality of reference datasets (535), and
a third data processing path (538) processes the second input data by prompting a **LLM** to identify second segments characterizing the user using the reference datasets as examples.

13. The method according to any of the preceding claims, further comprising
- for each content item, determining a probability score that said content item can be categorized in each identified first segment, and
- for the user, determining a probability score that said user can be categorized in each identified second segment.

14. The method according to any of the preceding claims, further comprising the steps, performed each content item of the plurality of content items, of:
- obtaining (620) a plurality of user reviews for the content item;
- generating (630) a review summary by processing the plurality of user reviews and the metadata associated with the content item, using a LLM;
- generating (630) a list of one or more sentiment tags through automated analysis of the plurality of user reviews;
- enriching (660) the content metadata with the generated review summary and list of sentiment tags for further processing.

15. The method according to any of the preceding claims, further comprising a step of generating (730) a personalized content description for a content item, wherein said content description includes at least one of a content summary, a content synopsis, a content review, by processing the content metadata associated with said content item and the identified set of one or more second segments associated with a target user, using a LLM.

16. A system (100) for recommending content items to at least one user, the system comprising:
- a database (120) storing a predefined categorization system comprising first segments for categorizing contents and second segments for categorizing audience;
- a segmentation module configured
for each content item of a plurality of content items, identify a set of one or more first segments that characterizes the content item, based on first input data including content metadata associated with the content item, and
for at least one user, identify a set of one or more second segments that characterizes the user, based on second input data including user behavioral data describing interactions of the user with content items;
- a second segmentation module configured to identify a set of one or more second segments that characterizes the at least one user in the predefined categorization system, based on user behavioral data describing interactions the user has with the contents,
- a selection module configured to:
for each content item, encode the identified set of first segments into a vector using a first embedding model;
for the at least one user, encode the identified set of second segments into a vector using the first embedding model; and
select at least one content item for the user by comparing the vectors representing the content items and the vector representing the user, to recommend the at least one selected content item to the user.

17. A non-transitory computer-readable medium storing instructions that, when executed by a processor, cause the processor to perform the method of any of claims 1 to 15.

18. Use of the system of any of claim 16 for recommending content items to at least one user in a content delivery platform.
